# NEUE EUROPÄISCHE PATENTSCHRIFT

(11) **EP 1 763 472 B2**
(45) Veröffentlichungstag und Bekanntmachung des Hinweises auf die Entscheidung über den Einspruch: **20.11.2013**
(45) Hinweis auf die Patenterteilung: 02.09.2009
(21) Anmeldenummer: 05767944.1
(22) Anmeldetag: 05.07.2005
(51) Int. Cl.: B65B 19/04

(54) **VORRICHTUNG ZUM HERSTELLEN VON DOPPELBLOCK-ZIGARETTENPACKUNGEN**
DEVICE FOR PRODUCING DOUBLE BLOCK CIGARETTE PACKAGES
DISPOSITIF POUR PRODUIRE DES PAQUETS DE CIGARETTES COMPORTANT DEUX BLOCS DE CIGARETTES

(30) Priorität: 06.07.2004 DE 102004032832
(43) Veröffentlichungstag der Anmeldung: 21.03.2007
(73) Patentinhaber: Focke & Co. (GmbH & Co. KG), 27283 Verden (DE)
(72) Erfinder: SCHÖNBERGER, Hans, 27283 Verden (DE); STEINKAMP, Irmin, 21217 Seevetal (DE); BUSE, Henry, 27374 Visselhövede (DE); STILLER, Martin, 27283 Verden (DE)
(74) Vertreter: Bolte, Erich
(86) Internationale Anmeldenummer: PCT/EP2005/007245
(87) Internationale Veröffentlichungsnummer: WO 2006/002980

(56) Entgegenhaltungen:
- EP-A- 0 141 629
- EP-A- 0 764 582
- EP-A1- 0 878 397
- EP-A1- 1 013 556
- WO-A2-01/15975
- DE-A1- 1 903 728
- DE-A1- 4 127 283
- GB-A- 205 586
- GB-A- 1 389 454
- US-A- 3 106 282
- US-A- 4 258 528
- US-A- 4 330 976
- US-A- 4 365 702
- US-A1- 2001 003 891
- US-A1- 2005 061 828
- US-B1- 6 540 061

## Beschreibung

Die Erfindung betrifft eine Vorrichtung zum Herstellung von Zigarettenpackungen mit mindestens zwei je von einer Innenumhüllung - Innenzuschnitt - umgebenen Zigarettengruppen unterschiedlicher Zigaretten, die aus jeder Zigarettengruppe zugeordneten Zigarettensammlern, insbesondere aus Schächten eines Zigarettenmagazins ausgeschoben und als Inhalt einer gemeinsamen Zigarettenpackung zuführbar sind.

Zigarettenpackungen mit zwei nebeneinander angeordneten, je von einem Innenzuschnitt umgebenen Zigarettengruppen sind als Doppelblock-Zigarettenpackungen bekannt. Die beiden Zigarettenblöcke weisen in jeder Hinsicht übereinstimmende Zigaretten auf. EP 0 141 629 zeigt eine Vorrichtung gemäß dem Oberbegrift des Anspruchs 1 und des Anspruchs 2. Bei der Vorrichtung gemäß EP 0 141 629 A1 werden als Beispiel Zigaretten amerikanischer und türkischer Herkunft in zwei Gruppen mit einer Innenumhüllung für jede Zigarettengruppe vorgeschlagen. Die zweilagigen Zigarettengruppen werden aus einem Zigaretten-Magazin mit üblichen Zigaretten-Schächten gleichzeitig ausgeschoben. Das gemeinsame Zigaretten-Magazin ist mittig mit einer Trennwand versehen, um die Zigaretten der unterschiedlichen Sorten voneinander zu trennen.

Bei Verpackungsmaschinen für Zigaretten ist weiterhin bekannt, ein Zigaretten-Magazin mit zwei Gruppen von Zigaretten-Schächten auszubilden, aus denen jeweils gleichzeitig zwei (komplette) Zigarettengruppen ausgestoßen und an Taschen eines querbewegbaren Zigarettenförderers übergeben werden (US 4 330 976). Der Zigarettenförderer ist alternativ als drehender Zigarettenrevolver oder als Taschenkette ausgebildet, jeweils mit Taschen für die Aufnahme einer Zigarettengruppe.

Die aus WO 01/15975 A2 bekannte Vorrichtung fasst Zigarettengruppen mit unterschiedlichen Anzahlen von Einzelzigaretten in gemeinsamen Verpackungen zusammen. Sie löst also hauptsächlich ein Problem unterschiedlicher Abmessungen von gemeinsam zu verpackenden Einzelgruppen. Die Zigaretten selbst sind jedoch alle von gleicher Art, was insbesondere daraus ersichtlich ist, dass ein einziger Zulauf vorgesehen ist, aus dem vier unterschiedliche Auslässe bedient werden.

US 2001/003891 A beschreibt eine Vorrichtung zum Verpacken gleich großer Zigarettengruppen in gemeinsame Verpackungen, bei der ebenfalls alle Zigaretten von gleicher Art sind. Das Problem, jeweils zwei individuelle Zigarettengruppen gezielt ein und derselben Packung zuzuführen, stellt sich dort nicht, weil im Ergebnis lediglich zwei beliebige gleiche Gruppen gleichartiger Zigaretten in eine gemeinsame Packung gelangen müssen.

Der Erfindung liegt die Aufgabe zugrunde, Vorrichtungen für die Herstellung von Doppelblock-Zigarettenpackungen hinsichtlich der Leistungsfähigkeit zu verbessern.

Zur Lösung dieser Aufgabe dienen Vorrichtungen gemäß Anspruch 1 oder Anspruch 2.

Bei der erfindungsgemäßen Vorrichtung werden demnach vier Zigarettengruppen gleichzeitig bereitgestellt, die den Inhalt von zwei Zigarettenpackungen bilden. Die für jede Sorte der zu verpackenden Zigaretten vorgesehenen Zigaretten-Magazine bzw. Zigarettensammler weisen einen Zigarettenkanal bzw. jeweils einen horizontalen ZigarettenSchacht auf. An diese schließen Zweigkanäle an, die in vertikal und/oder horizontal versetzten Zweigkanälen die Zigaretten zu den Schachtgruppen zur Bildung von Zigarettengruppen führen.

Weitere Einzelheiten der Erfindung werden nachfolgend anhand von in den Zeichnungen dargestellten Ausführungsbeispielen näher erläutert. Es zeigt:
- Fig. 1: eine offene Zigarettenpackung mit zwei Zigarettengruppen in perspektivischer Darstellung,
- Fig. 2: einen Teilbereich einer Verpackungsmaschine für die Herstellung von Zigarettenpackungen in schematischem Grundriss,
- Fig. 3: eine Einzelheit der Verpackungsmaschine gemäß Fig. 2 im Querschnitt bzw. in Queransicht in der Ebene III-III der Fig. 2, bei vergrößertem Maßstab,
- Fig. 4: ein Ausführungsbeispiel einer erfindungsgemäßen Vorrichtung in einer Darstellung bzw. Ansicht analog Fig. 3,
- Fig. 5: die Vorrichtung gemäß Fig. 4 in Queransicht gemäß Pfeil V,
- Fig. 6: eine ergänzte Darstellung der Vorrichtung gemäß Fig. 4, Fig. 5,
- Fig. 7: ein anderes Ausführungsbeispiel einer erfindungsgemäßen Vorrichtung zur Bildung von Zigarettengruppen in Seitenansicht,
- Fig. 8: eine erfindungsgemäße Fördereinheit für die gleichzeitige Bildung von vier Zigarettengruppen in perspektivischer Darstellung.

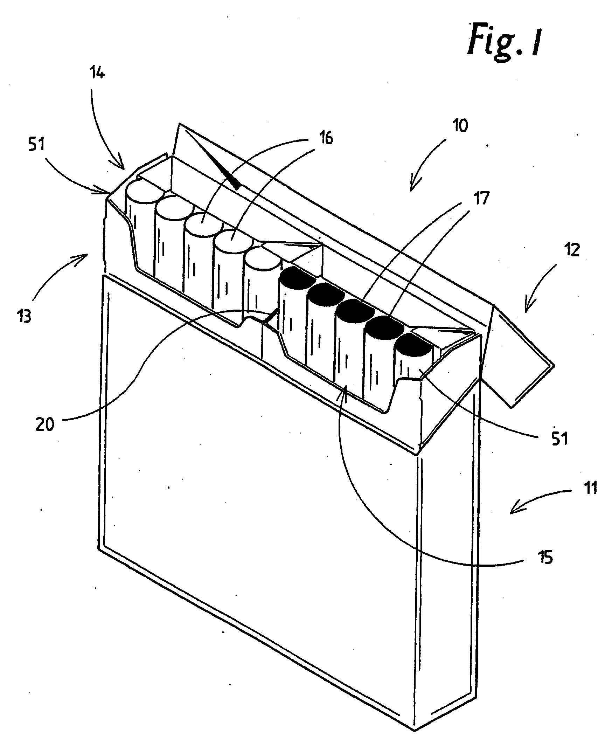

Bei dem in Fig. 1 gezeigten Ausführungsbeispiel einer Zigarettenpackung handelt es sich um eine Klappschachtel 10 üblicher Konstruktion mit Schachtelteil 11 und Deckel 12. Innerhalb des Schachtelteils 11 ist ein Kragen 13 fixiert. Der Packungsinhalt besteht aus zwei Zigarettengruppen 14, 15 aus unterschiedlichen Zigaretten 16, 17. In Fig. 1 sind die hinsichtlich Zusammensetzung des Tabaks und/oder .beigefügter Aromen und/oder der Marke und/oder der Größe unterschiedlichen Zigaretten 16, 17 entsprechend gekennzeichnet, und zwar im Bereich von Endflächen. Jede Zigarettengruppe 14, 15 besteht sortenrein aus Zigaretten 16 oder Zigaretten 17. Die Zigarettengruppen 14, 15 sind durch einen gemeinsamen Innenzuschnitt oder durch zwei separate Innenzuschnitte 18, 19 umhüllt, sodass zwei voneinander getrennte Zigarettenblöcke entstehen. Der Kragen 13 ist zur Abgrenzung der Zigarettengruppen 14, 15 bzw. der Zigarettenblöcke mit einer Trennwand 20 versehen. Die Zigarettengruppen 14, 15 bzw. von diesen gebildeten Zigarettenblöcke können gleiche Größe aufweisen oder hinsichtlich der Anzahl der Zigaretten 16 oder 17 unterschiedlich sein.

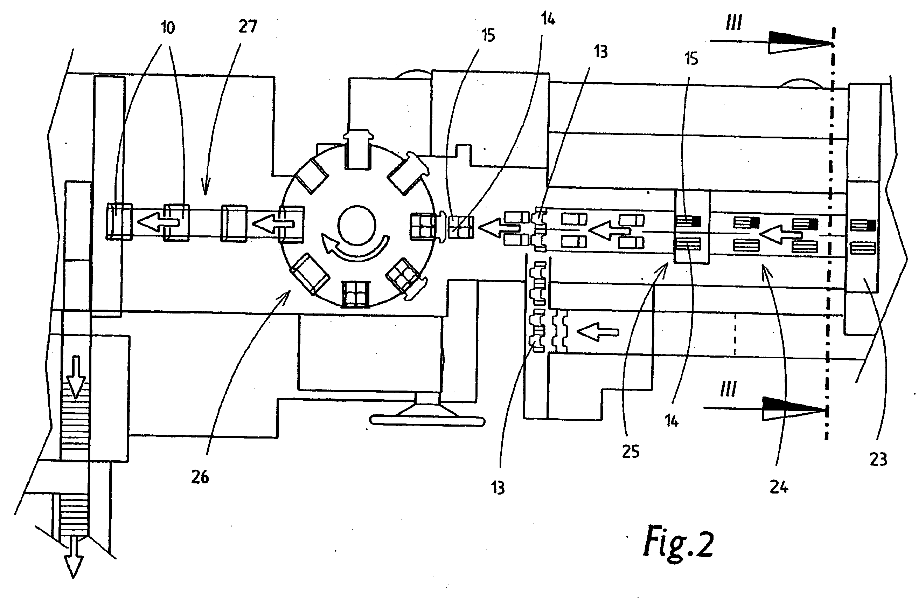

In Fig. 2 ist in schematischem Grundriss ein Ausschnitt einer Verpackungsmaschine gezeigt für die Fertigung von Zigarettenpackungen gemäß Fig. 1 oder ähnlichen. Die separat zugeführten unterschiedlichen Zigaretten 16, 17 werden einem Aggregat zur Bildung der Zigarettengruppen 14, 15 zugeführt, insbesondere einem Zigarettenmagazin 21, 22. Aus diesem werden die kompletten Zigarettengruppen 14, 15 ausgeschoben und an einen Zigarettenförderer übergeben, und zwar an einen Zigarettenrevolver 23. Von diesem werden je zwei Zigarettengruppen 14, 15 mit unterschiedlicher Ausführung der Zigaretten 16, 17 gemeinsam und nebeneinanderliegend an einen (zweiten) Zigarettenförderer 24 übergeben. Dieser transportiert je zwei nebeneinanderliegende Zigarettengruppen 14, 15 mit unterschiedlichen Zigaretten 16, 17 paarweise nebeneinanderliegend. Der Zigarettenförderer 24 weist entlang paralleler Bahnen bewegbare an einem Endlosförderer bzw. an einer Förderkette angeordnete Mitnehmer auf, die jeweils eine Zigarettengruppe 14, 15 rückseitig erfassen und transportieren. Im Förderbereich der Zigaretten weist der Zigarettenförderer 24 seitliche und obere Führungen für die Zigarettengruppen 14, 15 auf.

Die Zigarettengruppen 14, 15 werden durch den Zigarettenförderer 24 einem Einschlagaggregat 25 zugeführt. Dieses umhüllt die Zigarettengruppen 14, 15 jeweils mit einem Innenzuschnitt 18, 19.

Im Anschluss an das Einschlagaggregat 25, 26 werden die beiden von je einem Innenzuschnitt 18, 19 umhüllten Zigarettengruppen 14, 15 weitertransportiert, nun als Zigarettenblöcke. Auf diese werden Zuschnitte für den Kragen 13 aufgelegt. Die Einheit aus zwei Zigarettengruppen 14, 15 bzw. Zigarettenblöcken mit gemeinsamem Kragen 13 wird sodann in eine Tasche eines Faltrevolvers 26 eingeführt. In den Taschen befinden sich teilweise gefaltete Zuschnitte für eine Klappschachtel 10. Während des Transports durch den Faltrevolver 26 wird der Zuschnitt für die Klappschachtel 10 fertig gefaltet. Auf einer zur Eintrittsseite gegenüberliegenden Austrittsseite werden die weitgehend fertiggestellten Klappschachteln 10 in eine Packungsbahn 27 eingefördert. Danach erfolgt die übliche Behandlung der Klappschachteln 10.

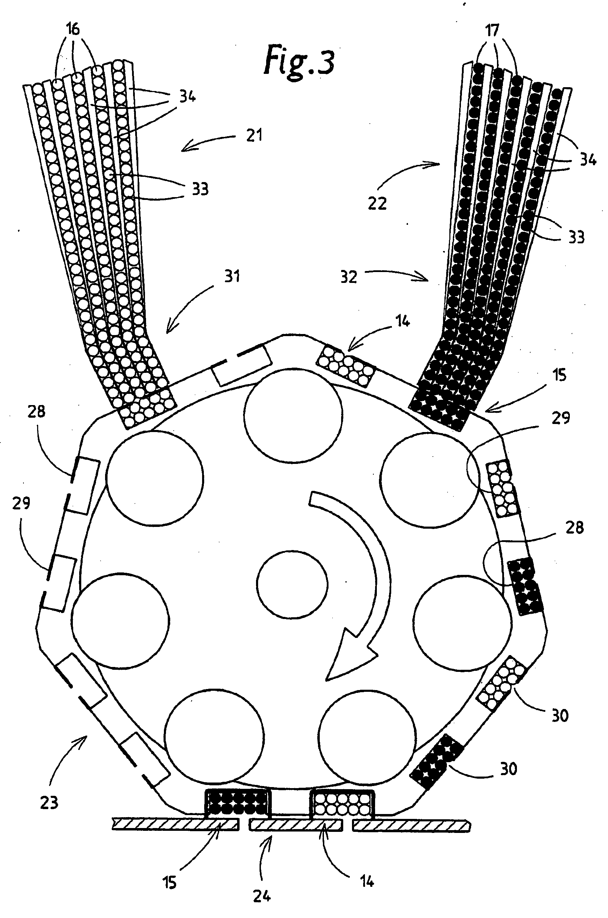

Eine Besonderheit ist die Zuführung der unterschiedlichen Zigaretten 16, 17 und die Bildung der Zigarettengruppen 14, 15. Bei dem Ausführungsbeispiel der Fig. 2 werden die Zigarettengruppen 14, 15 bei in Förderrichtung ausgerichteten Zigaretten 16, 17 transportiert. Die beiden einer Klappschachtel 10 zugeordneten Zigarettengruppen 14, 15 werden gleichzeitig von dem Zigarettenrevolver 23 an den Zigarettenförderer 24 übergeben. Der Zigarettenrevolver 23 ist zu diesem Zweck in einer Ebene quer zur Förderrichtung des Zigarettenförderers 24 oberhalb desselben positioniert. Der Zigarettenrevolver 23 weist jeweils zwei in einer gemeinsamen Ebene nebeneinanderliegende Taschen 28, 29 für je eine Zigarettengruppe 14, 15 auf. Der Zigarettenrevolver 23 ist taktweise drehbar (Pfeil in Fig. 3). Nach jedem Bewegungstakt befinden sich zwei Taschen 28, 29 mit Zigarettengruppen 14, 15 exakt im Bereich des Zigarettenförderers 24. Die Taschen 28, 29 sind an der radial außenliegenden Seite mit einem Schlitz 30 versehen, sodass die nach unten weisenden Taschen 28, 29 durch die Mitnehmer des Zigarettenförderers 24 entleert werden können.

Dem Zigarettenrevolver 23 sind als Zigarettenvorrat mindestens zwei Einheiten zur Bildung der Zigarettengruppen 14, 15 zugeordnet. Bei dem Ausführungsbeispiel der Fig. 3 handelt es sich um zwei Zigarettenmagazine 21, 22, von denen nur die unteren Bereiche, nämlich Schachtgruppen 31, 32 gezeigt sind. Bei diesen handelt es sich um an sich bekannte Einheiten aus parallelen Zigarettenschächten 33 und Trennwänden 34. In jedem Zigarettenschacht 33 befindet sich eine aufrechte Reihe von achsparallel liegenden Zigaretten 16, 17.

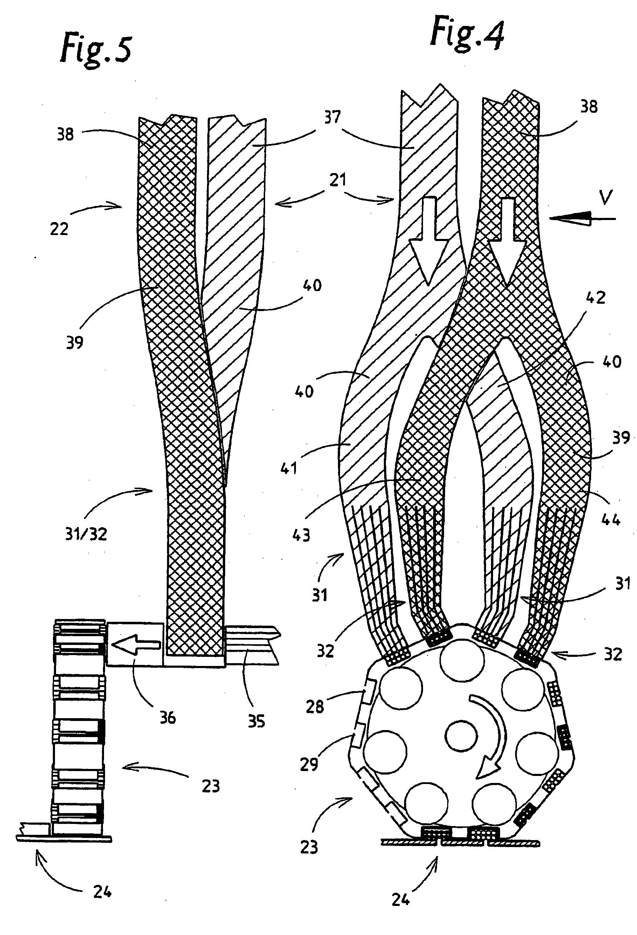

Die Schachtgruppen 31, 32 der Zigarettenmagazine 21, 22 enden in einer zum Zigarettenrevolver 23 versetzten Ebene (Fig. 5). Durch Schieber 35 wird jeweils eine Zigarettengruppe 14, 15 aus dem unteren Bereich der Schachtgruppen 31, 32 ausgeschoben und über eine Brücke 36 in benachbart ausgerichtete Taschen 28, 29 des Zigarettenrevolvers 23 eingeführt.

Eine Besonderheit besteht darin, dass die beiden Schachtgruppen 31, 32 gemäß Fig. 3 jeweils einer Tasche 28, 29 aufeinanderfolgender Paare von Taschen zugeordnet sind. In einem ersten Füllvorgang werden Zigarettengruppen 14, 15 an voneinander entfernt liegende obere Taschen 28, 29 übergebene. Erst nach einem zweiten Fülltakt sind die beiden einer Zigarettenpackung bzw. Klappschachtel 10 zugeordneten Taschen 28, 29 mit den Zigarettengruppen 14, 15 befüllt.

Die Zigarettenmagazine 21, 22 bzw. die Schachtgruppen 31, 32 sind in besonderer Weise so ausgebildet, dass in einem von dem jeweiligen Zigarettenförderer entfernt liegenden Bereich, insbesondere im Bereich der Zuführung der gesondert gefertigten unterschiedlichen Zigaretten 16, 17, die beiden Zigarettenmagazine 21, 22 in versetzten Ebenen angeordnet sind (Fig. 5). Auch Zigarettenkanäle 37, 38 zum Transport der Zigaretten 16, 17 in Abwärtsrichtung zu den Schachtgruppen 31, 32 sind versetzt zueinander angeordnet, werden jedoch in einem unteren bzw. in einem zu dem jeweiligen Zigarettenförderer benachbarten Bereich durch entsprechende Formgebung so geführt, dass untere Mündungsbereiche der Schachtgruppen 31, 32 in derselben Ebene nebeneinander liegen, ausgerichtet auf die jeweils zu befüllenden Taschen des Zigarettenförderers. Die Zigarettenmagazine 21, 22 bzw. deren Zigarettenkanäle 37, 38 sind vorzugsweise in übereinstimmender Gestaltung mit Versatzabschnitten 39, 40 ausgebildet (Fig. 5) die ohne Beeinträchtigung der abwärts gerichteten Förderbewegung der Zigaretten 16, 17 bewirken, dass die gegebenenfalls mehreren nebeneinander liegenden Zigarettenkanäle 37, 38 in derselben Ebene münden.

Zur Erhöhung der Leistungsfähigkeit können die den unterschiedlichen Zigaretten 16, 17 zugeordneten Zigarettenmagazine 21, 22 eine Mehrzahl von jeweils zu einer Tasche 28, 29 führende Zigarettenkanäle 37, 38 aufweisen. Bei dem Ausführungsbeispiel gemäß Fig. 4 weist jeder Zigarettenkanal 37, 38 zwei Zweigkanäle 41, 42 bzw. 43, 44 auf. Die Zweigkanäle 41..44 sind aufgrund gabelförmiger Gestaltung so angeordnet, dass jeweils am unteren Bereich gebildete Schachtgruppen 31, 32 je einer Tasche 28, 29 benachbart sind. Bei diesem Ausführungsbeispiel können demnach in einem Arbeitstakt vier Zigarettengruppen 14, 15 aus und in demnach vier Taschen 28, 29 eingeschoben werden. Der Zigarettenrevolver 23 wird allerdings jeweils um zwei Taschen 28, 29 weiterbewegt, sodass für die Zuführung der Zigaretten ein größerer Zeitraum zur Verfügung steht.

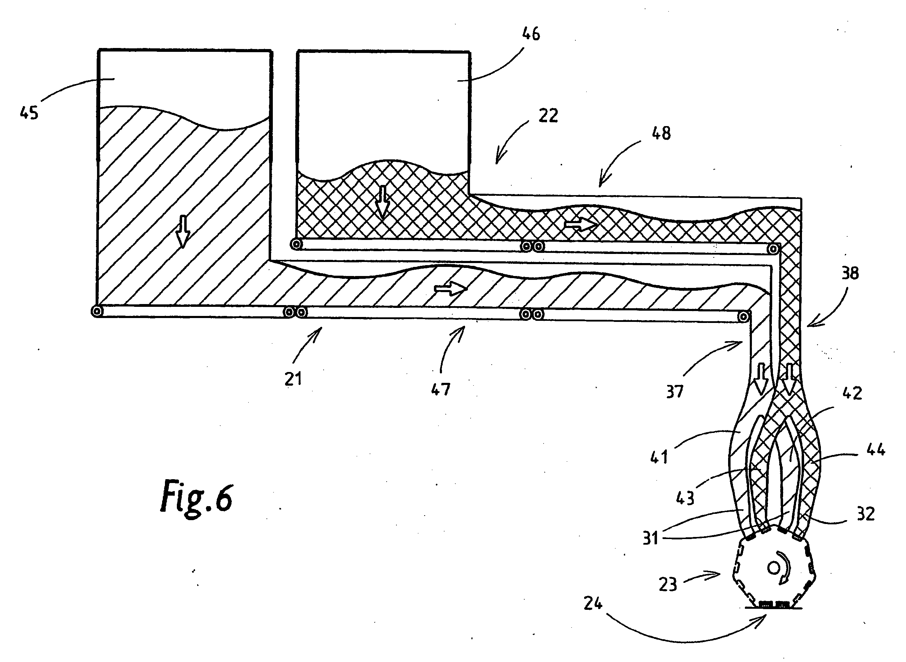

Fig. 6 zeigt die Gesamtheit eines Zigarettenmagazins für die Zuführung von (zwei) unterschiedliche ausgebildeten Zigaretten 16, 17. Jedes Zigarettenmagazin 21, 22 weist einen Aufnahmebehälter 45, 46 für jede Sorte von Zigaretten 16, 17 auf. Den Aufnahmebehältern 45, 46 können die Zigaretten in Transportbehältern (Schragen) zugeführt werden oder über eine Direktverbindung zur Zigarettenherstellmaschine.

An die Aufnahmebehälter 45, 46 schießen jeweils horizontal gerichtete Förderschächte 47, 48 für die Zigaretten 16, 17 an. Die Förderschächte 47, 48 transportieren die Zigaretten 16, 17 zu einem oberen Eintrittsende der aufrechen, abwärts führenden Zigarettenkanäle 37, 38.

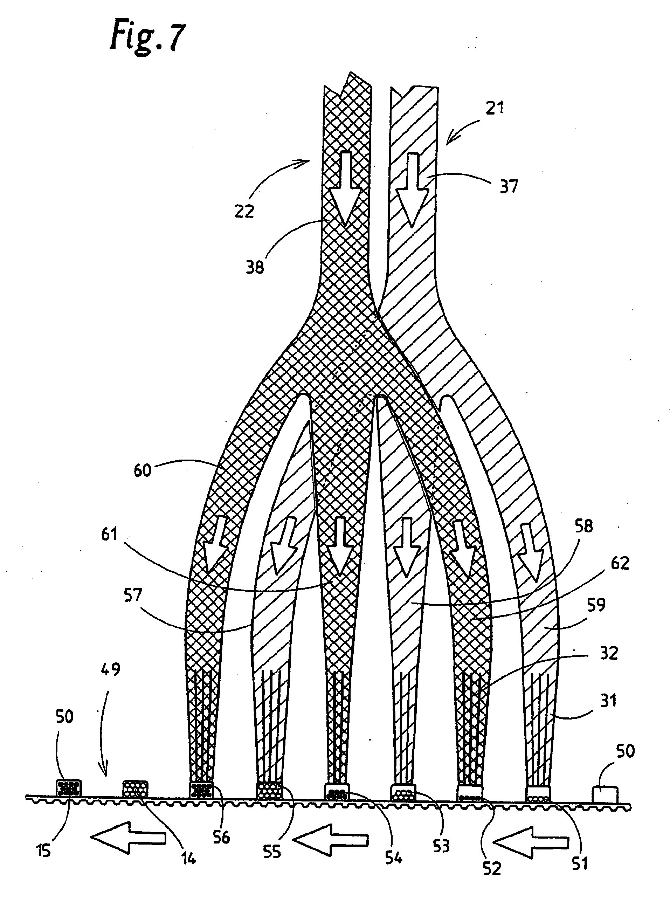

Fig. 7 zeigt hinsichtlich der Ausbildung der Zigarettenkanäle 37, 38 und hinsichtlich der Zweigkanäle eine Ausführung, bei der die Zigaretten 16, 17 bzw. die aus diesen gebildeten Zigarettengruppen 14, 15 unmittelbar einem als Taschenförderer ausgebildeten Zigarettenförderer 49 zugeführt werden. Dieser weist einzelne Taschen 50 für je eine Zigarettengruppe 14, 15 auf. Die Anordnung ist so getroffen, dass die Zigaretten 16, 17 in den Taschen 50 quer zur Förderrichtung weisen. Die Zigarettenkanäle 37, 38 bzw. deren Schachtgruppen 31, 32 münden ebenfalls seitlich versetzt neben dem Zigarettenförderer 49. Die Übertragung der Zigarettengruppen erfolgt ebenfalls durch Schieber, analog zu Fig. 5. Allerdings besteht eine Besonderheit darin, dass die Zigaretten 16, 17 nicht als komplette Zigarettengruppe, sondern in Lagen 51, 52 in die Taschen 50 eingeführt werden. Erste Schachtgruppen 31, 32 führen in einem ersten Einschubtakt untere Lagen 51, 52 in die freien Taschen 50 ein. Danach werden mittlere Lagen 53, 54 durch zugeordnete Schachtgruppen 31, 32 und schließlich obere Lagen 55, 56 in die Taschen 50 eingeführt, sodass nach drei Einschubtakten die Zigarettengruppen 14, 15 komplett sind. Bei diesem Ausführungsbeispiel schließen an die (aufrechten) Zigarettenkanäle 37, 38 jeweils drei Zweigkanäle 57, 58, 59 bzw. 60, 61, 62 an. Diese sind bogenförmig und etwa symmetrisch zu einer (gedachten) vertikalen Mittelebene der Zigarettenkanäle 37, 38 angeordnet.

Eine Besonderheit ist die Relativstellung und auch die Gestaltung von (Zigaretten-)Kanälen für den horizontalen und vertikalen Transport der Zigaretten. Diese werden grundsätzlich queraxial als fortlaufender Strang von neben- und übereinanderliegenden Zigaretten 16, 17 gefördert. Bei dem Ausführungsbeispiel gemäß Fig. 6 sind die (horizontalen) Förderschächte quer zur Förderrichtung bzw. Drehachse des Zigarettenförderers bzw. des Zigarettenrevolvers 23 gerichtet. Die Zigaretten werden demnach aus der horizontalen Förderrichtung lediglich in die abwärts gerichteten Zigarettenkanäle 37, 38 umgelenkt.

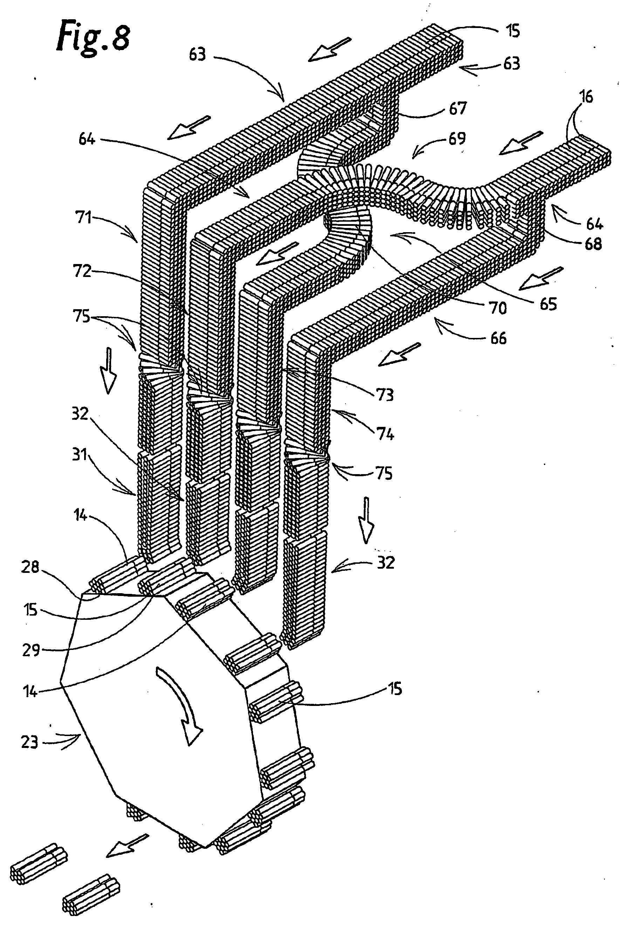

Häufig ist aus maschinentechnischen Gründen eine Anordnung der horizontalen Förderstrecken für die Zigaretten 15, 16 in Axialrichtung des Zigarettenrevolvers 23 bzw. quer zur Förderebene erwünscht. Ein solches Beispiel zeigt Fig. 8. Die unterschiedlichen Zigaretten 16, 17 werden in einem horizontalen Zentralschacht 63, 64 angeliefert. Zur gleichzeitigen Bildung von mehreren, nämlich vier Zigarettengruppen 14, 15 je Arbeitstakt, wird eine Kanalabzweigung 65, 66 zu jedem Zentralschacht 63, 64 gebildet, und zwar durch einen nach unten gerichteten Vertikalschacht 67, 68. Dieser geht jeweils in die zugeordnete Kanalabzweigung 65, 66 über. Es entstehen so insgesamt vier im Wesentlichen in horizontalen Ebenen verlaufende Zigarettenkanäle 63, 64, 65, 66. Diese sind der Höhe nach versetzt zueinander. Der erste Zentralschacht 63 bildet in seiner Fortsetzung einen Zigarettenkanal, der in einer (oberen) Ebene durchgehend, insbesondere geradlinig, verläuft. In einer demgegenüber nach unten versetzten Ebene verläuft der zweite Zentralschacht 64, dessen Fortsetzung ebenfalls einen Zigarettenkanal bildet, der in horizontaler Ebene versetzt zum Zentralschacht 63 verläuft. Dieser zweite Zentralschacht 64 bildet einen Versatz 69, nämlich eine im Wesentlichen S-förmig ausgebildete Förderbahn für die Zigaretten, derart, dass ein Endabschnitt des Zentralschachts 64 bzw. des Zigarettenkanals einen geringeren Abstand von dem Zentralschacht 63 aufweist als die Zentralschächte 63, 64 im Bereich der Zuführung.

Die Kanalabzweigung 65 des Zentralschachts 63 erstreckt sich in einer nochmals tiefer liegenden Ebene und bildet ebenfalls einen S-förmigen Versatz 70 in entgegengesetzter Förderrichtung zum Versatz 69. Schließlich verläuft in einer weiteren, tieferen Ebene die Kanalabzweigung 66 vom Zentralschacht 64.

Jedem Zigarettenkanal 63, 64, 65, 66 ist ein an diesen anschließender vertikaler Förderabschnitt zugeordnet, nämlich aufrechte Zigarettenkanäle 71, 72, 73, 74. Die horizontalen Zigarettenkanäle 63..66 schließen über eine rechtwinklige, gerundete Umlenkung an die aufrechten Zigarettenkanäle 71..74 an. Die Zigaretten 16, 17 sind im Bereich der horizontalen Förderabschnitte sowie der vertikalen Förderabschnitte quer gerichtet zur Lage in den Taschen 28, 29 des Zigarettenförderers bzw. des Zigarettenrevolvers 23. Im Bereich der vertikalen Förderung findet eine Wendebewegung der Zigaretten 16, 17 um 90° statt, sodass eine Ausrichtung auf die Position der Taschen 28, 29 erfolgt. Zu diesem Zweck ist jeder aufrechte Zigarettenkanal 71..74 mit einer Wendeeinheit 75 versehen, die eine schraubenartige Windung darstellt, sodass die Zigaretten 16, 17 bzw. der Zigarettenstrom während der abwärts gerichteten Förderung fortlaufend gewendet wird. Die Zigaretten 16, 17 werden danach an die vier Schachtgruppen 31, 32 übergeben, die als untere Fortsetzung der aufrechten Zigarettenkanäle 71..74 wirken.

### Bezugszeichenliste

- 10: Klappschachtel
- 11: Schachtelteil
- 12: Deckel
- 13: Kragen
- 14: Zigarettengruppe
- 15: Zigarettengruppe
- 16: Zigarette
- 17: Zigarette
- 18: Innenzuschnitt
- 19: Innenzuschnitt
- 20: Trennwand
- 21: Zigarettenmagazin
- 22: Zigarettenmagazin
- 23: Zigarettenrevolver
- 24: Zigarettenförderer
- 25: Einschlagaggregat
- 26: Faltrevolver
- 27: Packungsbahn
- 28: Tasche
- 29: Tasche
- 30: Schlitz
- 31: Schachtgruppe
- 32: Schachtgruppe
- 33: Zigarettenschacht
- 34: Trennwand
- 35: Schieber
- 36: Brücke
- 37: Zigarettenkanal
- 38: Zigarettenkanal
- 39: Versatzabschnitt
- 40: Versatzabschnitt
- 41: Zweigkanal
- 42: Zweigkanal
- 43: Zweigkanal
- 44: Zweigkanal
- 45: Aufnahmebehälter
- 46: Aufnahmebehälter
- 47: Förderschacht
- 48: Förderschacht
- 49: Zigarettenförderer
- 50: Tasche
- 51: Lage
- 52: Lage
- 53: Lage
- 54: Lage
- 55: Lage
- 56: Lage
- 57: Zweigkanal
- 58: Zweigkanal
- 59: Zweigkanal
- 60: Zweigkanal
- 61: Zweigkanal
- 62: Zweigkanal
- 63: Zentralschacht
- 64: Zentralschacht
- 65: Kanalabzweigung
- 66: Kanalabzweigung
- 67: Vertikalschacht
- 68: Vertikalschacht
- 69: Versatz
- 70: Versatz
- 71: Zigarettenkanal
- 72: Zigarettenkanal
- 73: Zigarettenkanal
- 74: Zigarettenkanal
- 75: Wendeeinheit

## Patentansprüche

1. Vorrichtung zum Herstellen von Zigarettenpackungen (10) mit mindestens zwei je von einer Innenumhüllung-Innenzuschnitt (18, 19) - umgebenen Zigarettengruppen (14, 15) unterschiedlicher Zigaretten (16, 17), die aus jeder Zigarettengruppe (14, 15) zugeordneten Zigarettensammlem, insbesondere aus Schächten eines Zgarettenmagazins (21, 22) ausgeschoben und als Inhalt einer gemeinsamen Zigarettenpackung (10) zuführbar sind, **gekennzeichnet durch** folgeende Merkmale:
a) die aus den Zigarettensammlern ausgeschobenen Zigarettengruppen (14, 15) sind einem gemeinsamen Zigarettenförderer (23, 24, 49) mit Taschen (28, 29: 50) für je eine Zigarettengruppe (14, 15) zuführbar,
b) für jede Art von Zigaretten (16, 17) sind mindestens zwei Schachtgruppen (31, 32) vorgesehen,
c) jede Schachtgruppe (31, 32) mündet im Bereich von benachbarten oder einander zugeordneten Taschen (28, 29; 50) des Zigarettenförderers (23, 24, 49),
d) die unterschiedlichen Zigaretten (16, 17) sind **durch** je einer Art von Zigaretten (16, 17) zugeordnete Förderer, nämlich jeweils einen Zigarettenkanal (37, 38) zuführbar,
e) die Zigarettensammler und/oder die Zigarettenkanäle (37, 38) sind in versetzt zueinander liegenden Vertikalebenen angeordnet, die Schachtgruppen (31, 32) hingegen sind mindestens mit unteren Mündungsbereichen (etwa) in derselben Ebene parallel zum Zigarettenförderer (23, 24, 49) angeordnet, wobei zwischen den versetzten Bereichen und den ausgerichteten Bereichen Versatzabschnitte (39, 40) als Übergang angeordnet sind.

2. Vorrichtung zum Herstellen von Zigarettenpackungen (10) mit mindestens zwei je von einer Innenumhüllung - Innenzuschnitt (18, 19) - umgebenen Zigarettengruppen (14, 15) unterschiedlicher Zigaretten (16, 17), die aus jeder Zigarettengruppe (14, 15) zuge-ordneten Zigarettensammlem, insbesondere aus Schächten eines Zigarettenmagazins (21. 22) ausgeschoben und als Inhalt einer gemeinsamen Zigarettenpackung (10) zuführbar sind, wobei die Zigaretten (16, 17) jeweils in horizontal verlaufenden Zigarettenkanälen (63, 64; 65, 66) zuführbar sind, und wobei an die horizontalen Zigarettenkanäle (63..66) aufrechte Zigarettenkanäle (71, 72; 73, 74) für jede Sorte Zigaretten (16, 17) anschüeßen und die aufrechten Zigarettenkanäle (71..74) in Schachtgruppen (31, 32) übergehen, **gekennzeichnet durch** folgende Merkmale:
a) die aus den Zigarettensammlern ausgeschobenen Zigarettengruppen (14, 15) sind einem gemeinsamen Zigarettenförderer (23, 24, 49) mit Taschen (28, 29; 50) für je eine Zigarettengruppe (14, 15) zuführbar,
b) für jede Art von Zigaretten (16, 17) sind mindestens zwei Schachtgruppen (31, 32) vorgesehen,
c) jede Schachtgruppe (31, 32) mündet im Bereich von benachbarten oder einander zugeordneten Taschen (28, 29; 50) des Zigarettenförderers (23, 24, 49),
d) die Zigarettenkanäle (63, 64; 65, 66) sind der Höhe nach versetzt zueinander angeordnet.

3. Vorrichtung nach Anspruch 1 oder 2, **dadurch gekennzeichnet, dass** jedes Zigarettenmagazin (21, 22) einen Sammel- bzw. Aufnahmebehälter (45, 46) für Zigaretten (16, 17) aufweist, wobei die aufrechten Zigarettenkanäle (37, 38) an den zugeordneten Aufnahmebehälter (45, 46) bzw. an einen horizontalen Förderschacht (47, 48) für Zigaretten (16 oder 17) anschließen und in einem unteren Bereich Zweigkanäle (41, 42; 43, 44) bilden.

4. Vorrichtung nach Anspruch 1 oder einem der weiteren Ansprüche, **gekennzeichnet durch** folgende Merkmale:
a) die Schachtgruppen (31, 32) sind einem Zigarettenrevolver (23) als Zigarettenförderer mit jeweils paarweise zueinander ausgerichteten, in derselben Ebene liegenden Taschen (28, 29) zugeordnet,
b) untere Endbereiche der Schachtgruppen (31, 32) münden im Bereich von zu beschickenden Taschen (28, 29), derart, dass **durch** Schieber (35) in einem Arbeitstakt hinsichtlich der Art der Zigaretten (16, 17) übereinstimmende Zigarettengruppen (14, 15) in jeweils zwei einander zugeordnete Taschen (28, 29) einführbar sind,
c) die Zigarettenmagazine (21, 22) bzw. deren Zigarettenkanäle (37, 38) weisen zwei Schachtgruppen (31, 32) für jede Art von Zigarettengruppen (14, 15) auf,
d) die Schachtgruppen (31, 32) sind den zu beschickenden Taschen (28, 29) derart zugeordnet, dass in einem Ausschubtakt vier aufeinanderfolgende Taschen (28, 29) des zigarettenrevolvers (23) mit Zigarettengruppen (14, 15) beschickbar sind.

5. Vorrichtung nach Anspruch 1 oder einem der weiteren Ansprüche, **dadurch gekennzeichnet, dass** die Zigaretten (16, 17) zur Bildung von Zigarettengruppen (14, 15) lagenweise, also unter Bildung von Lagen (51, 52; 53, 54; 55, 56) in die Taschen (50) des als Taschenförderer ausgebildeten Zigarettenförderers (49) einschiebbar sind, wobei die Zigarettenmagazine (21, 22) eine der Anzahl der Lagen (51..56) je Zigarettengruppe (14, 15) entsprechende Anzahl von Schachtgruppen (31, 32) aufweisen, die in Förderrichtung abwechselnd den aufeinanderfolgenden Taschen (50) des Zigarettenförderers (49) zugeordnet sind derart, dass nach einer der Anzahl der Lagen (51..56) entsprechenden Anzahl von Fördertakten des Zigarettenförderers (49) die Zigarettengruppen (14, 15) in den Taschen (50) komplettiert sind.

6. Vorrichtung nach Anspruch 5, **dadurch gekennzeichnet, dass** jeweils drei Schachtgruppen (31, 32) abwechselnd und aufeinanderfolgend im Bereich des Zigarettenförderers (49) positioniert sind zur Übertragung von drei Lagen (51..56) der Zigaretten (16, 17) in jede von sechs Taschen (50).

7. Vorrichtung nach Anspruch 2, **dadurch gekennzeichnet, dass** die beiden unterschiedlichen Zigaretten (16, 17) als fortlaufende, gesonderte Zigarettenströme zugeführt werden, insbesondere durch separate, horizontale Zigarettenschächte (63, 64), an die jeweils Kanalabzwelgungen (65, 66) anschließen zur Zuführung der Zigaretten zu mindestens zwei horizontalen Zigarettenschächten (65, 66), derart, dass jeder Sorte Zigaretten (16, 17) zwei horizontale Zigarettenschächte (63, 64, 65, 66) und daran anschließende aufrechte Zigarettenkanäle (71, 72; 73, 74) zugeordnet sind.

8. Vorrichtung nach Anspruch 2 oder 7, **dadurch gekennzeichnet, dass** die aufrechten Zigarettenkanäle (71..74) jeweils eine Wendeeinheit (75) aufweisen zum Wenden der Zigaretten (16, 17) in den Zigarettenkanälen (71..74) um 90°.

## Claims

1. Apparatus for producing cigarette packs (10) having at least two cigarette groups (14, 15), each enclosed by an inner wrapper - inner blank (18, 19) - of different cigarettes (16, 17), which are pushed out of cigarette collectors assigned to each cigarette group (14, 15), in particular out of shafts of a cigarette magazine (21, 22), and can be fed as contents to a common cigarette pack (10), **characterized by** the following features:
a) the cigarette groups (14, 15) pushed out of the cigarette collectors can be fed to a common cigarette conveyor (23, 24, 49) with pockets (28, 29; 50) for a respective cigarette group (14, 15),
b) at least two shaft groups (31, 32) are provided for each type of cigarette (16, 17),
c) each shaft group (31, 32) opens out in the region of adjacent or associated pockets (28, 29; 50) of the cigarette conveyor (23, 24, 49),
d) the different cigarettes (16, 17) can be fed by conveyors assigned to a respective type of cigarette (16, 17), namely in each case by a cigarette channel (37, 38),
e) the cigarette collectors and/or the cigarette channels (37, 38) are arranged in offset vertical planes, but the shaft groups (31, 32), in contrast, have at least bottom mouth-opening regions arranged (approximately) in the same plane parallel to the cigarette conveyor (23, 24, 49), wherein offset portions (39, 40) are arranged as a transition between the offset regions and the aligned regions.

2. Apparatus for producing cigarette packs (10) having at least two cigarette groups (14, 15), each enclosed by an inner wrapper - inner blank (18, 19) - of different cigarettes (16, 17), which are pushed out of cigarette collectors assigned to each cigarette group (14, 15), in particular out of shafts of a cigarette magazine (21, 22), and can be fed as contents to a common cigarette pack (10), wherein the cigarettes (16, 17) can be fed in each case in horizontally running cigarette channels (63 64; 65, 66), and wherein the horizontal cigarette channels (63..66) are followed by upright cigarette channels (71, 72; 73, 74) for each type of cigarette (16, 17), and the upright cigarette channels (71..74) merge into shaft groups (31, 32), **characterized by** the following features:
a) the cigarette groups (14, 15) pushed out of the cigarette collectors can be fed to a common cigarette conveyor (23, 24, 49) with pockets (28, 29; 50) for a respective cigarette group (14, 15),
b) at least two shaft groups (31, 32) are provided for each type of cigarette (16, 17),
c) each shaft group (31, 32) opens out in the region of adjacent or associated pockets (28, 29; 50) of the cigarette conveyor (23, 24, 49),
d) the cigarette channels (63, 64; 65, 66) are offset in height in relation to one another.

3. Apparatus according to Claim 1 or 2, **characterized in that** each cigarette magazine (21, 22) has a collecting or accommodating container (45, 46) for cigarettes (16, 17), the upright cigarette channels (37, 38) following the associated accommodating containers (45, 46) and a horizontal conveying shaft (47, 48) for cigarettes (16 or 17) and forming branch channels (41, 42; 43, 44) in a bottom region.

4. Apparatus according to Claim 1 or one of the further claims, **characterized by** the following features:
a) the shaft groups (31, 32) are assigned to a cigarette turret (23) as a cigarette conveyor with pockets (28, 29) which are aligned with one another in pairs in each case and are located in the same plane,
b) bottom end regions of the shaft groups (31, 32) open out in the region of pockets (28, 29) which are to be charged, such that, in an operating cycle, cigarette groups (14, 15) which correspond in respect of the type of cigarette (16, 17) can be introduced by pushers (35) into in each case two associated pockets (28, 29),
c) the cigarette magazines (21, 22) and/or the cigarette channels (37, 38) thereof have two shaft groups (31, 32) for each type of cigarette group (14, 15),
d) the pockets (28, 29) which are to be charged have the shaft groups (31, 32) assigned to them such that four successive pockets (28, 29) of the cigarette turret (23) can be charged with cigarette groups (14, 15) in one pushing-out cycle.

5. Apparatus according to Claim 1 or one of the further claims, **characterized in that** the cigarettes (16, 17), for forming cigarette groups (14, 15), can be pushed in a layered manner, that is to say in the form of layers (51, 52; 53, 54; 55, 56), into the pockets (50) of the cigarette conveyor (49), which is designed in the form of a pocket conveyor, wherein the cigarette magazines (21, 22) have a number of shaft groups (31, 32) which corresponds to the number of layers (51..56) per cigarette group (14, 15), and these shaft groups are assigned alternately, as seen in the conveying direction, to the successive pockets (50) of the cigarette conveyor (49) such that, following a number of conveying cycles of the cigarette conveyor (49) which corresponds to the number of layers (51..56), the cigarette groups (14, 15) in the pockets (50) are complete.

6. Apparatus according to Claim 5, **characterized in that** in each case three shaft groups (31, 32) are positioned alternately one after the other in the region of the cigarette conveyor (49) in order to transfer three layers (51..56) of cigarettes (16, 17) into each of six pockets (50).

7. Apparatus according to Claim 2, **characterized in that** the two different types of cigarette (16, 17) are fed as continuous, separate cigarette streams, in particular by separate, horizontal cigarette shafts (63, 64), which are followed in each case by channel branches (65, 66) for feeding the cigarettes to at least two horizontal cigarette shafts (65, 66) such that each type of cigarette (16, 17) is assigned two horizontal cigarette shafts (63, 64, 65, 66) and upright cigarette channels (71, 72; 73, 74) which follow these.

8. Apparatus according to Claim 2 or 7, **characterized in that** the upright cigarette channels (71..74) each have a turning unit (75) for turning the cigarettes (16, 17) in the cigarette channels (71..74) through 90°.

## Revendications

1. Dispositif pour produire des paquets de cigarettes (10) comprenant au moins deux groupes de cigarettes (14, 15) de différentes cigarettes (16, 17) entourés à chaque fois par une enveloppe interne - pièce découpée interne (18, 19) -, les cigarettes étant expulsées de collecteurs de cigarettes associés à chaque groupe de cigarettes (14, 15), notamment de fourreaux d'un magasin de cigarettes (21, 22), et pouvant être acheminées sous forme de contenu à un paquet de cigarettes commun (10), **caractérisé par** les caractéristiques suivantes :
a) les groupes de cigarettes (14, 15) expulsés hors des collecteurs de cigarettes peuvent être acheminés à un transporteur de cigarettes commun (23, 24, 49) muni de cavités (28, 29 ; 50) pour un groupe de cigarettes respectif (14, 15),
b) pour chaque type de cigarettes (16, 17), on prévoit au moins deux groupes de fourreaux (31, 32),
c) chaque groupe de fourreaux (31, 32) débouche dans la région de cavités adjacentes ou associées les unes aux autres (28, 29 ; 50) du transporteur de cigarettes (23, 24, 49).
d) les différentes cigarettes (16, 17) peuvent être acheminées à chaque fois par un transporteur associé à chaque type de cigarettes (16, 17), à savoir par un canal de cigarettes (37, 38) respectif,
e) les collecteurs de cigarettes et/ou les canaux de cigarettes (37, 38) sont disposés dans des plans verticaux décalés les uns par rapport aux autres, mais par contre les groupes de fourreaux (31, 32) sont disposés aux moins avec des régions d'embouchure inférieures (approximativement) dans le même plan, parallèlement au transporteur de cigarettes (23, 24, 49), et entre les régions décalées et les régions alignées des portions décalées (39, 40) étant disposées sous forme de transition.

2. Dispositif pour produire des paquets de cigarettes (10) comprenant au moins deux groupes de cigarettes (14, 15) de différentes cigarettes (16, 17) entourés à chaque fois par une enveloppe interne - pièce découpée interne (18, 19) -, les cigarettes étant expulsées de collecteurs de cigarettes associés à chaque groupe de cigarettes (14, 15), notamment de fourreaux d'un magasin de cigarettes (21, 22), et pouvant être acheminées sous forme de contenu à un paquet de cigarettes commun (10), les cigarettes (16, 17) pouvant être acheminées à chaque fois dans des canaux de cigarettes s'étendant horizontalement (63, 64 ; 65, 66), et des canaux de cigarettes (71, 72 ; 73, 74) debout se raccordant aux canaux de cigarettes horizontaux (63..66) pour chaque type de cigarettes (16, 17) et les canaux de cigarettes debout (71..74) se prolongeant par des groupes de fourreaux (31, 32), **caractérisé par** les caractéristiques suivantes :
a) les groupes de cigarettes (14, 15) expulsés hors des collecteurs de cigarettes peuvent être acheminés à un transporteur de cigarettes commun (23, 24, 49) muni de cavités (28, 29 ; 50) pour un groupe de cigarettes respectif (14, 15),
b) pour chaque type de cigarettes (16, 17), on prévoit au moins deux groupes de fourreaux (31, 32),
c) chaque groupe de fourreaux (31, 32) débouche dans la région de cavités adjacentes ou associées les unes aux autres (28, 29 ; 50) du transporteur de cigarettes (23, 24, 49),
d) les canaux de cigarettes (63, 64 ; 65, 66) sont disposés de manière décalée en hauteur les uns par rapport aux autres.

3. Dispositif selon la revendication 1 ou 2, **caractérisé en ce que** chaque magasin de cigarettes (21, 22) présente un récipient de collecte ou de réception (45, 46) pour des cigarettes (16, 17), les canaux de cigarettes debout (37, 38) se raccordant aux récipients de réception associés (45, 46) ou à un fourreau de transport horizontal (47, 48) pour des cigarettes (16 ou 17), et formant dans une région inférieure des canaux de branchement (41, 42 ; 43, 44).

4. Dispositif selon la revendication 1 ou l'une quelconque des autres revendications, **caractérisé par** les caractéristiques suivantes :
a) les groupes de fourreaux (31, 32) sont associés à un revolver de cigarettes (23) servant de transporteur de cigarettes avec des cavités (28, 29) situées dans le même plan et alignées à chaque fois par paire les unes avec les autres,
b) des régions d'extrémité inférieures des groupes de fourreaux (31, 32) débouchent dans la région de cavités (28, 29) à garnir, de telle sorte que des groupes de cigarettes (14, 15) coïncidant en termes de types de cigarettes (16, 17) puissent être introduits par des coulisseaux (35) dans une cadence de travail à chaque fois dans deux cavités associées l'une à l'autre (28, 29),
c) les magasins de cigarettes (21, 22) ou leurs canaux de cigarettes (37, 38) présentent deux groupes de fourreaux (31, 32) pour chaque type de groupes de cigarettes (14, 15),
d) les groupes de fourreaux (31, 32) sont associés aux cavités à garnir (28, 29) de telle sorte que dans une cadence d'éjection, quatre cavités successives (28, 29) du revolver de cigarettes (23) puissent être garnies de groupes de cigarettes (14, 15).

5. Dispositif selon la revendication 1 ou selon l'une quelconque des autres revendications, **caractérisé en ce que** les cigarettes (16, 17) peuvent être insérées pour former des groupes de cigarettes (14, 15), sous forme stratifiée, c'est-à-dire en formant des couches (51, 52 ; 53, 54 ; 55, 56) dans les cavités (50) du transporteur de cigarettes (49) réalisé sous forme de transporteur à cavités, les magasins de cigarettes (21, 22) présentant un nombre de groupes de fourreaux (31, 32) correspondant au nombre des couches (51..56) de chaque groupe de cigarettes (14, 15), qui sont associés dans la direction de transport en alternance aux cavités successives (50) du transporteur de cigarettes (49), de telle sorte qu'après un nombre de cadences de transport du transporteur de cigarettes (49) correspondant au nombre des couches (51..56), les groupes de cigarettes (14, 15) soient complétés dans les cavités (50).

6. Dispositif selon la revendication 5, **caractérisé en ce que** trois groupes de fourreaux (31, 32) sont à chaque fois positionnés en alternance et successivement dans la région du transporteur de cigarettes (49), pour le transfert de trois couches (51..56) des cigarettes (16, 17) dans chacune de six cavités (50).

7. Dispositif selon la revendication 2, **caractérisé en ce que** les deux types de cigarettes différents (16, 17) sont acheminés sous forme de flux de cigarettes continus et séparés, notamment par des fourreaux de cigarettes horizontaux séparés (63, 64), se raccordent aux dérivations de canaux respectives (65, 66) pour acheminer les cigarettes à au moins deux fourreaux de cigarettes horizontaux (65, 66), de telle sorte que chaque type de cigarettes (16, 17) soit associé à deux fourreaux de cigarettes horizontaux (63, 64, 65, 66) et à des canaux de cigarettes verticaux s'y raccordant (71, 72 ; 73, 74).

8. Dispositif selon la revendication 2 ou 7, **caractérisé en ce que** les canaux de cigarettes verticaux (71..74) présentent à chaque fois une unité de rotation (75) pour tourner les cigarettes (16, 17) dans les canaux de cigarettes (71..74) de 90°.
